# EUROPEAN PATENT APPLICATION

(11) **EP 2 851 888 A1**
(43) Date of publication of application: **25.03.2015**
(21) Application number: 14183837.5
(22) Date of filing: 05.09.2014
(51) Int. Cl.: G08G 5/00, G06Q 10/10

(54) **A method to facilitate retrieving an all ready reviewed datalink message for review again**

(30) Priority: 24.09.2013 US 201314034853
(71) Applicant: Honeywell International Inc., Morristown, NJ 07962-2245 (US)
(72) Inventor: McGuffin, Thomas F., Morristown, NJ 07962-2245 (US); Judd, Thomas D., Morristown, NJ 07962-2245 (US); He, Xiaozhong, Morristown, NJ 07962-2245 (US)
(74) Representative: Houghton, Mark Phillip

(57) **Abstract**

A data messaging system is provided. The data messaging system includes means for displaying a message log on a human-machine-interface (HMI) device; means for selecting at least one message identified for quick retrieval at a later time; means for storing the at least one selected message identified for quick retrieval in at least one save-selected-message log in one of a functional module and a computer, wherein a number of messages in the at least one save-selected-message log is much less than a number of messages in the message log by an end of a trip; means for displaying titles of the messages in the at least one save-selected-message log on the HMI device in place of the message log; and means for displaying a selected message associated with a title selected from the displayed titles of the messages in the at least one save-selected-message log.

## Description

### BACKGROUND

Currently available Aeronautical data messaging system applications such as future air navigation system (FANS), controller pilot data link communications (CPDLC), aeronautical telecommunications network (ATN) CPDLC, airline operational communication (AOC), Aeronautical Research Incorporated (ARINC) 623, etc. utilize human-machine-interface (HMI) devices with limited capabilities and size to display message logs. For example, data link systems in aircraft that are equipped with Aeronautical Research Incorporated (ARINC) Communications Addressing and Reporting System (ACARS) protocols may use a Multifunction Control Display Unit (MCDU) display with a size of 12 lines and 24 characters per line. Datalink messages are stored in a message log and the message titles are displayed on the MCDU. The pilot views the message log titles displayed on MCDU and selects the message he wants to view. The MCDU size limits the message log title display to 5 titles per MCDU page. If there are more than 5 messages and the message that the pilot wants to retrieve and view again is not on the top (most recent) page of the message log, the pilot scrolls through the pages of the message log to find the message he wants to review. The number of messages in a message log during a single short flight can be 40-50. Long flights often have over 100 messages stored on the message log by the end of the flight. The message log is a finite length. For example, some currently available message logs set a maximum limit of 100 messages in the message log. In that case, when the messages received exceed 100, the oldest message is discarded as a new, additional message is received.

Some messages received at the beginning of the flight such as flight plan or weather information may need to be reviewed by the pilot later in the flight. When the pilot wants to review a message received early in the flight at the end of the flight, the pilot is required to scroll back through the sequence of message log pages to find a message received at the beginning of the flight. In some cases, if the maximum limit has been exceeded, the message is no longer in the message log. If the message is still in the message log, the pilot may need to press the scroll button up to ten times and to view up to ten message log pages. While scrolling through the message log, the pilot has his head down for an extended time and is not able to focus on other aspects of the flight. It is undesirable for the pilot to be head down for an extended time.

### SUMMARY

The Embodiments of the present invention provide methods and systems for data messaging system to save and to retrieve selected messages without a reduced amount of head down time and will be understood by reading and studying the following specification.

The present application relates to a data messaging system. The data messaging system includes means for displaying a message log on a human-machine-interface (HMI) device; means for selecting at least one message identified for quick retrieval at a later time; means for storing the at least one selected message identified for quick retrieval in at least one save-selected-message log in one of a functional module and a computer, wherein a number of messages in the at least one save-selected-message log is much less than a number of messages in the message log by an end of a trip; means for displaying titles of the messages in the at least one save-selected-message log on the HMI device in place of the message log; and means for displaying a selected message associated with a title selected from the displayed titles of the messages in the at least one save-selected-message log.

### DRAWINGS

Embodiments of the present invention can be more easily understood and further advantages and uses thereof more readily apparent, when considered in view of the description of the preferred embodiments and the following figures in which:
Figures 1A-1D are embodiments of data messaging systems to store and retrieve selected messages in accordance with the present invention;
Figure 2 is an enlarged view of the human-machine-interface (HMI) device of the data messaging system of Figure 1A displaying an exemplary page 1 of 20 in an air traffic control (ATC) message log;
Figure 3 is an exemplary page 20 of 20 in an ATC message log;
Figures 4-6 are an exemplary sequence of three images of an ATC message log displayed on a display when selecting a message for storage in accordance with the present invention;
Figure 7 is an exemplary page 1 of 2 in a save-selected-message log in accordance with the present invention;
Figure 8 is an exemplary page 20 of 20 in an ATC message log indicating the ninety-eighth message has been saved in a save-selected-message log in accordance with the present invention;
Figure 9 is a flow diagram of a method of to save and retrieve selected messages in accordance with the present invention;
Figure 10 is an enlarged view of the human-machine-interface (HMI) device of the data messaging system of Figure 1A displaying an exemplary page 1 of 2 in an airline operational communication (AOC) message log; and
Figure 11 is an enlarged view of the human-machine-interface (HMI) device of the data messaging system of Figure 10 displaying an exemplary page 1 of 2 of an airline operational communication (AOC) message.
In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

The technology described herein provides a way for a pilot or air traffic controller to identify and select for storage on a separate, shorter-length log at least one message that the pilot thinks may need to be viewed again at a later time during the flight. When the pilot wants to review one of the selected messages, the pilot is able to select to view the separate, shorter-length log and to scroll through only a relatively few number of messages to find the desired message. The messages selected and stored on the separate, shorter-length log, which is referred to herein as a saved-selected-message log, are never automatically deleted if the number of messages in the message log exceeds a maximum length of the message log. As defined herein, the "length of a log" is the "number of messages" that can be stored in the log. As defined herein, a "message" is a "datalink message".

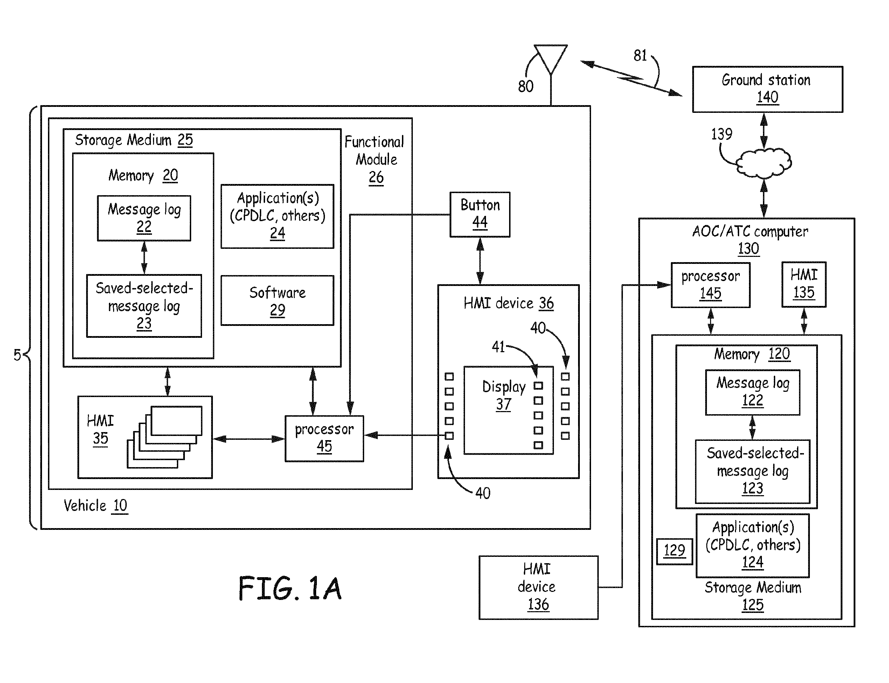

Figures 1A-1D are embodiments of data messaging systems 5-7 to store and retrieve selected messages in accordance with the present invention. The data messaging systems 5-7 provide a user with the ability to quickly retrieve, with minimal (or no) scrolling through screen sets, an already reviewed datalink message for review again at a later time.

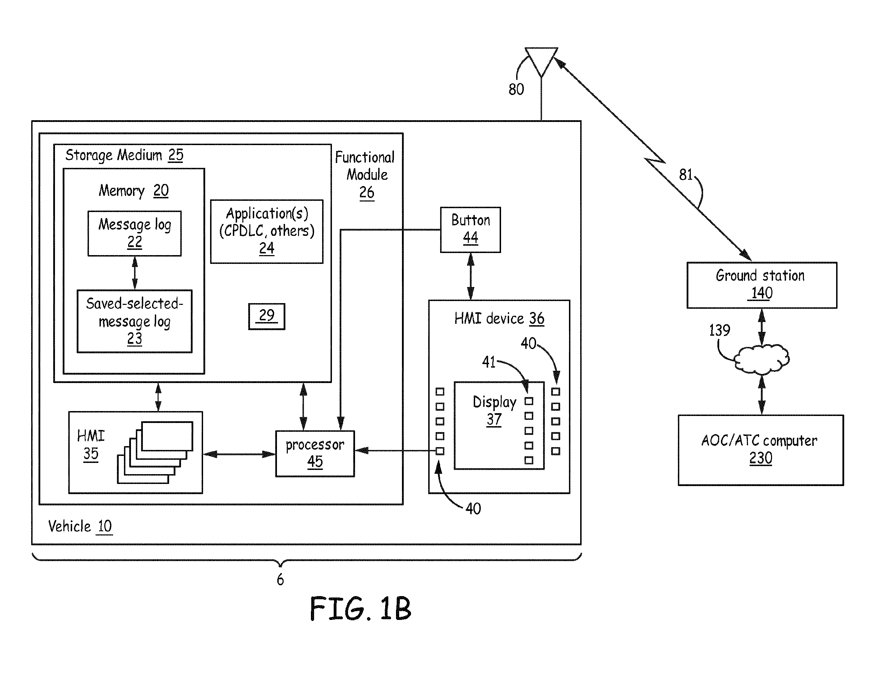

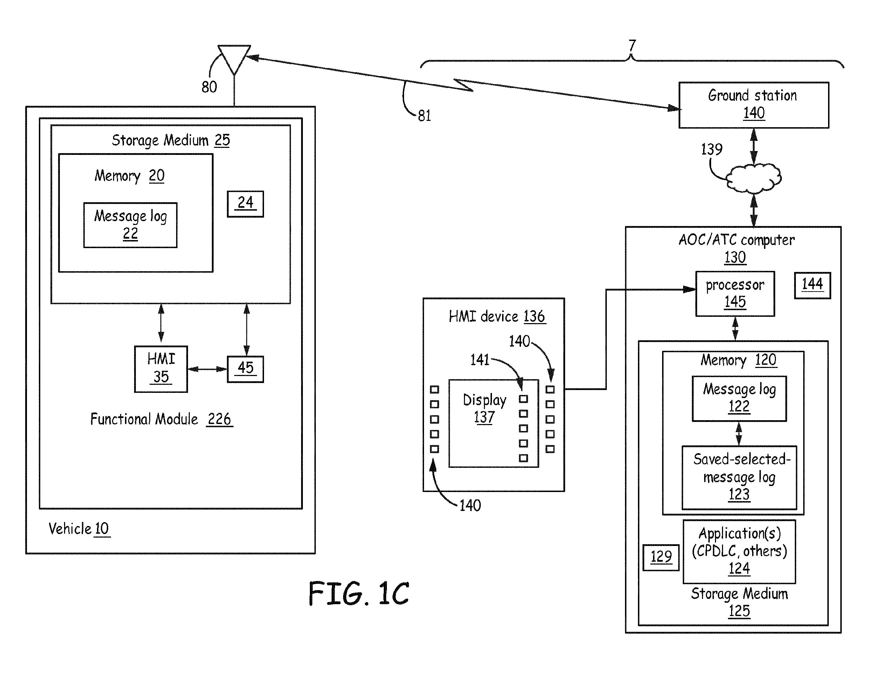

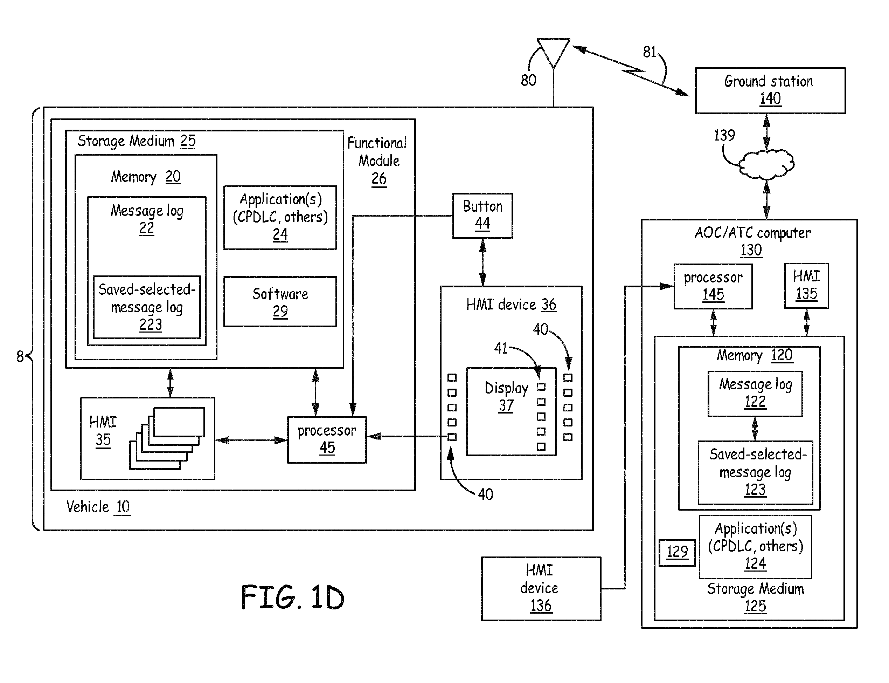

Figure 1A shows a data messaging system 5 used to store and retrieve selected messages for quick retrieval in accordance with the present invention. The data messaging system 5 includes a functional module 26 and a human machine interface (HMI) device 36 in a vehicle 10. In the exemplary embodiment shown in Figure 1, the vehicle is an aircraft 10. An antenna 80 external to the aircraft 10 is used to communicatively couple a transceiver (not shown) in the aircraft 10 to a ground station 140 via the wireless communication link 81. The ground station 140 is communicatively coupled via a ground network 139 to an airline operational communication (AOC)/air traffic controller (ATC) computer 130, which is also referred to herein as an "air traffic control computer 130". The ground station 140, the ground network 139, and the AOC/ATC computer 130 together form a ground-based system. As used herein, the term "AOC/ATC" is used to express "AOC or ATC". The AOC/ATC computer 130 is communicatively coupled to the HMI device 136. The AOC/ATC computer 130 on the ground has a similar function and structure as the functional module 26 in the vehicle 10. The data messaging system 5 as implemented in the aircraft 10 is referred to herein as an avionics messaging system and the data messaging system 5 implemented on the ground is referred to herein as an aeronautical ground messaging system.

The functional module 26 includes a HMI 35, a processor 45, and storage medium 25. The storage medium 25 includes the memory 20 and software 29 executable by the processor 45 to implement the processes for the vehicle 10 described herein. The software 29 includes at least one application represented generally as application(s) 24. In one implementation of this embodiment, the applications 24 include a plurality of applications. In another implementation of this embodiment, the applications 24 include a controller pilot data link communications (CPDLC) application.

A message log 22 and a save-selected-message log 23 are stored in the memory 20. The save-selected-message log 23 is a subset of the message log 22 and only includes those messages that have been identified and selected as messages that may require quick retrieval at a later time. The number of messages in the at least one save-selected-message log 23 is much less than a number of messages in the message log 22 by an end of a trip of the vehicle 10. If the vehicle 10 is an aircraft 10, the end of the trip is the end of a flight of the aircraft 10. Likewise, if the vehicle 10 is a water-based vehicle 10, the end of the trip is the end of a voyage of the water-based vehicle 10. Likewise, if the vehicle 10 is a train 10, the trip ends when the train 10 enters the train station at the final destination. The following description is based on the vehicle 10 being an aircraft 10, although the technology described herein can be implemented with other types of vehicles 10.

The AOC/ATC computer 130 includes a HMI 135, a processor 145, and storage medium 125. The storage medium 125 includes the memory 120 and software 129 executable by the processor 145 to implement the processes for the ground system described herein. The software 129 includes at least one application represented generally as application(s) 124. In one implementation of this embodiment, the applications 124 include a plurality of applications. In another implementation of this embodiment, the applications 124 include a controller pilot data link communications (CPDLC) application. A message log 122 and a save-selected-message log 123 are stored in the memory 120. The save-selected-message log 123 is a subset of the message log 122 and only includes those messages that have been identified and selected as messages that may require quick retrieval at a later time. The number of messages in the at least one save-selected-message log 123 is much less than a number of messages in the message log 122 by an end of a flight of the aircraft.

The HMI device 36 in the vehicle 10 includes a display 37 and at least one selection interface represented generally at 40 and 41. As shown in Figure 1A, the vehicle 10 also includes a selection interface 44, which is a button in the vehicle 10 communicatively coupled to the HMI device 36 and the processor 45. HMI device 136 in the ground system is similar in structure and function to the HMI device 36 in the vehicle 10. The HMI device 136 includes a display 137 and at least one selection interface (Figure 1C).

The HMI 35 includes a set of screens used by members of an aircraft flight crew to receive and send messages for viewing on the HMI device 36. In one implementation of this embodiment, the HMI 35 is a CPDLC HMI 35 used by members of an aircraft flight crew to receive and send CPDLC messages. Members of the aircraft flight crew are also referred to herein as "flight crew" and "pilot".

Likewise, the HMI 135 includes a set of screens used by members of a ground crew to receive and send messages for viewing on the HMI device 136. In one implementation of this embodiment, an air traffic controller (ATC) HMI is used by members of a ground crew to receive and send messages for viewing.

In one implementation of this embodiment, CPDLC messages are exchanged over the aeronautical telecommunications network (ATN) and displayed on the HMI device 36. In another implementation of this embodiment, future air navigation system (FANS) CPDLC messages are exchanged over an ACARS network and displayed on the HMI device 36.

In one implementation of this embodiment, the aircraft HMI device 36 is a multifunction control display unit (MCDU). In another implementation of this embodiment, the aircraft HMI device 36 is a multi-function display (MFD). In yet another implementation of this embodiment, the aircraft HMI device 36 is a touch screen with a key board. In yet another implementation of this embodiment, the aircraft HMI device 36 is a graphical display with a cursor control and a keyboard.

In one implementation of this embodiment, the ground-based HMI device 136 is a touch screen with a key board. In yet another implementation of this embodiment, the ground-based HMI device 136 is a graphical display with a cursor control and a keyboard.

The message log 22 is used to display the received uplink messages and the transmitted downlink messages on the display 37 of the HMI device 36. The save-selected-message log 23 is used to display the titles of the messages in the at least one save-selected-message log on the HMI device in place of the message log 22. The save-selected-message log 23 is also used to display on the HMI device 36 a selected message associated with a title selected from the displayed titles of the messages in the at least one save-selected-message log 23.

Likewise, the message log 122 is used to display the downlink messages received at the ground computer 130 and the uplink messages transmitted by the ground computer on the display 137 of the HMI device 136. The save-selected-message log 123 is used to display the titles of the messages in the at least one save-selected-message log on the HMI device in place of the message log 122. The save-selected-message log 123 is also used to display on the HMI device 136 a selected message associated with a title selected from the displayed titles of the messages in the at least one save-selected-message log 123.

One embodiment of a selection interface 41 includes icons, shown as buttons on the display 37, to indicate a selection by the user. When the selection interface 41 is touched, information indicative of the touched selection interface 41 is sent to the processor 45 in the functional module 26. Another embodiment of a selection interface 40 includes buttons, which are adjacent to the display 37, to be pressed to indicate a selection by the user. The selection interface 40 is communicatively coupled to the display 37 and the processor 45. When the selection interface 40 is pressed, information indicative of the pressed selection interface 40 is sent to the processor 45 in the functional module 26. Another embodiment of a selection interface 44 includes a button, which is offset from the display 37 but within the vehicle 10, to be pressed to indicate a selection by the user. The selection interface 44 is communicatively coupled to the processor 45. When the selection interface 44 is pressed, information indicative of the pressed selection interface 44 is sent to the processor 45 in the functional module 26.

The information indicative of the pressed selection interface 40, 41, or 44 is an identification of selected message for quick retrieval at a later time that is on the display 37. The processor 45 inputs the information indicative of the pressed selection interface 40, 41, or 44 and then stores the selected message identified for quick retrieval in at least one save-selected-message log in a functional module 26 or the computer 130. In one implementation of this embodiment, the selected message is sent from the message log 22 in the memory 20 to the save-selected-message log 23 in the memory 20 based on instructions from the processor 45.

In another implementation of this embodiment, there is more than one saved-selected-message log, as is described in detail below. In such an embodiment, the processor 45 receives information indicative of which of the saved-selected-message logs the selected message is to be sent, based on a second implementation of one of the selection interfaces 40, 41, and 44. Alternately, the processor 45 executes the software 29 to determine to which of the saved-selected-message logs the selected message is to be sent, without a second implementation of one of the selection interfaces 40, 41, and 44.

By using the system 5, a pilot and a ground crew member require less time to find a desired message. The user (e.g., the pilot or the ground crew member) views of a display a message log on a human-machine-interface (HMI) device 36 or 136. The user selects a message identified for quick retrieval at a later time. The selected message identified for quick retrieval is stored in at least one save-selected-message log 23 or 123 in the functional module 26 or the AOC/ATC computer 130, respectively.

The number of messages in the save-selected-message log 23 and/or 123 is much less than a number of messages in the message log 22 or 122 by an end of a flight. For example, the number of messages in the save-selected-message log 23 or 123 may be five messages, and the number of messages in the message log 22 and/or 122 by an end of a flight may be between 40 and 100 messages. When the user wants to retrieve the message identified for quick retrieval at a later time, the user displays titles of the messages in the save-selected-message log 23 or 123 on the HMI device 36 or 136, respectively, in place of the message log 22 or 122, respectively. In one implementation of this embodiment, the user indicates that he or she wants to view the titles of the messages in the save-selected-message log 23 or 123 by pushing the button 44 or 144 (Figure 1C). In another implementation of this embodiment, the user indicates that he or she wants to view the titles of the messages in the save-selected-message log 23 or 123 by touching another selection interface.

In one implementation of this embodiment, the saved-selected-message log 123 in the AOC/ATC computer 130 is for a given flight of each of the aircraft 10 that are communicatively coupled to the ground station 140. In another implementation of this embodiment, the saved-selected-message log 123 in the AOC/ATC computer 130 is for a plurality of flights of several of the aircraft 10 that are communicatively coupled to the ground station 140 for a particular time.

Once the user views the titles of the messages in the save-selected-message log 23 or 123 and quickly selects the message to be retrieved, based on the title, the selected message associated with a title selected from the displayed titles of the messages in the at least one save-selected-message log is displayed on the display 137 for the user to view the selected message.

As defined herein, "quick retrieval at a later time" is the difference in time it takes the pilot to look at the short list of messages designated for quick retrieval (i.e., quick-time) and the time it takes to find the message to be retrieved in the entire list of all received messages (i.e., regular-time). For an exemplary case, if one assumes that it takes a pilot or air traffic controller about 1-2 seconds to find a desired message in a short list of messages (e.g., five messages), then the quick-time is about 1-2 seconds. If the desired message is near the message in the message log 22 where the pilot starts looking, the regular-time it would take to find the desired message in the entire list of all received messages could be assumed to be as short as 1-2 seconds, which is about the same as the assumed quick-time required to look at the short list of messages designated for quick retrieval. However, if the desired message is at the far end of the list of titles from where the pilot starts looking to find the desired message, one could assume that the regular-time required to find the desired message in the entire list could be about 20-30 seconds. In this latter exemplary case, the quick retrieval (i.e., the difference between regular-time and quick-time) equals a time savings of 19-28 seconds. If the pilot misses the title on a first scroll through the message log 22 and has to look through the list of titles again, one could assume that it could take 40-60 seconds for the pilot to find the desired message. In this case, the quick retrieval equals a time savings of 39-58 seconds. It is to be recognized that these time are exemplary and could be different. In one implementation of this embodiment, a short list of messages is found on a single display screen. In another implementation of this embodiment, a short list of messages is five messages. In yet another implementation of this embodiment, a short list of messages is found on two display screens.

In this manner, the time to find a message is minimized, the reading long list of pages of messages is avoided, and the pilot (air traffic controller) is able to identify a few messages without head down time or with a limited head down time, such as 1-2 seconds. Advantageously, the selected messages stored in the save-selected-message log 23 or 123 are not automatically deleted when the number of messages in the message log 22 is exceeded.

When the pilot wants to review a message which has been saved for quick retrieval, the pilot presses a key or button to call up the titles of the messages in the saved-selected-message log 23 which would be a short list of 10 titles or less. The pilot quickly scans the short list of "saved" messages even through some of the messages may be from the beginning of the flight and many messages were received subsequent to the message that the pilot wants to see. The pilot returns to the normal real-time message log 22 after reviewing the message retrieved from the saved-selected-message log 23 on the display 37 of the HMI device 36. The pilot is also able to view the response to the message retrieved from the saved-selected-message log 23 on the display 37 of the HMI device 36. In one implementation of this embodiment, the pilot simultaneously views the message retrieved from the saved-selected-message log 23 as well as the response to the message retrieved from the saved-selected-message log 23 on the display 37 of the HMI device 36. In another implementation of this embodiment, the pilot first views the message retrieved from the saved-selected-message log 23 and can press a button or key to see the response to the message retrieved from the saved-selected-message log 23 on the display 37 if so desired. The capability to save messages for quick retrieval is a feature of an ATC message log and an AOC message log in the vehicle 10.

In one implementation of this embodiment, the selection interface is a button 40. In another implementation of this embodiment, the selection interface is an icon 41 displayed on the HMI device 36. In yet another implementation of this embodiment, both the button 40 and the icon 41 are available to the pilot.

The functional module 26 can be one of a communication management unit (CMU), a communication management function (CMF), a flight management computer (FMC), a flight management function (FMF), an electronic flight bag (EFB), an avionics module, an avionics functional module, an air traffic control computer, or a future developed functional module for use with avionics.

The processor 45 executes software 29, CPDLC application 23 and other applications 24, and/or firmware that causes the processor 45 to perform at least some of the processing described here as being performed by the system to reduce head-down time. At least a portion of such software 29 and 129 and/or firmware executed by the processor 45 and any related data structures are stored in storage medium 25 during execution of the software. Memory 20 includes any suitable memory now known or later developed such as, for example, random access memory (RAM), read only memory (ROM), and/or registers within the processor 45. In one implementation, the processor 45 includes a microprocessor or microcontroller. Moreover, although the processor 45 and memory 20 are shown as separate elements in Figure 1, in one implementation, the processor 45 and memory 20 are implemented in a single device (for example, a single integrated-circuit device). The software 29 and 129 and/or firmware executed by the processor 45 includes a plurality of program instructions that are stored or otherwise embodied on a storage medium 25 from which at least a portion of such program instructions are read for execution by the processor 45. In one implementation, the processor 45 includes processor support chips and/or system support chips such as application-specific integrated circuits (ASICs).

The selected message stored in the saved-selected-message log 23 is still accessible in the message log 22 unless it was deleted when the message log 22 exceeded the maximum number of saved messages. If the saved-selected-message log 23 contains the maximum number of messages in the saved-selected-message log 23 or 123, the user is prompted select a message to remove at least one message from the saved-selected-message log 23 or 123, respectively, to make room for the newly selected message. In that case, the removed message is no longer listed in or accessible from the saved-selected-message log 23 or 123, respectively. Since the messages that are saved in the saved-selected-message log 23 or 123 have also been maintained in the message log 22 or 122, the removed message will still be in the message log 22 or 122 unless that message has been deleted as an older message if the maximum limit of the message log 22 or 122 has been exceeded.

In one implementation of this embodiment, the saved-selected-message logs 23 and 123 each include two separate saved-selected-message logs; one for ATC messages identified and selected from an ATC message log 22; and one for AOC messages identified and selected from an AOC message log 22. The saved-selected-message log 23 or 123 associated with the ATC message log 22 is referred to herein as an ATC saved-selected-message log 23 or 123, respectively. The saved-selected-message log 23 or 123 associated with the AOC message log 22 is referred to herein as an AOC saved-selected-message log 23 or 123, respectively.

The same functionality described above is available to the ground crew member using the AOC/ATC computer 130 and the HMI device 136. This permits the ground crew member to reduce time searching for messages on the message log 122. It is to be noted that the user in the vehicle 10 is able to implement a saved-selected-message log 23 via a HMI device 36, regardless of whether or not the user on the ground has access to a saved-selected-message log 123 via the HMI device 136.

Figure 1B shows an embodiment of the data messaging system 6 used to store and retrieve selected messages for quick retrieval in accordance with the present invention. The data messaging system 6 differs from the data messaging system 5 in that there is no saved-selected-message log 123 on the ground in the data messaging system 6. The data messaging system 6 includes a functional module 26, a human machine interface (HMI) device 36 in a vehicle 10 and includes the ground station 140, the ground network 139, an AOC/ATC computer 230, and a HMI device 136 (not shown in Figure 1B). The AOC/ATC computer 230 includes a message log 122 but does not include a saved-selected-message log.

Figure 1C shows an embodiment of the data messaging system 7 used to store and retrieve selected messages for quick retrieval in accordance with the present invention. The data messaging system 7 differs from the data messaging system 5 in that there is no saved-selected-message log 23 in the vehicle 10 in the data messaging system 7. The data messaging system 7 includes an AOC/ATC computer 130, a human machine interface (HMI) device 136 on the ground and a functional module 226, and a HMI device 36 in the vehicle 10 (not shown in Figure 1C). The functional module 226 in the vehicle 10 includes a message log 22 and does not include a saved-selected-message log.

Figure 1D shows an embodiment of the data messaging system 8 used to store and retrieve selected messages for quick retrieval in accordance with the present invention. The data messaging system 8 differs from the data messaging system 5 in that the saved-selected-message log 223 is a subset of the message log 22. In this embodiment, the processor 45 inputs the information indicative of the pressed selection interface 40, 41, or 44 and identifies the selected message identified for quick retrieval. The selected message that is identified for quick retrieval is flagged (e.g., marked or identified) based on an attribute associated with the message within the message log 22. In one implementation of this embodiment, the unflagged messages in the message log 22 are associated with a first attribute (e.g., type 1) associated with the message while the selected message that is identified for quick retrieval is associated with a second attribute (e.g., type 2). Thus, the "save-selected-message log 223" is also referred to herein as "subset 223 of the message log 22". In this manner, the at least one message identified for quick retrieval in at least one save-selected-message log 223 is stored in one of a functional module and a computer as a subset 223 of the message log 22. In one implementation of this embodiment, the at least one message identified for quick retrieval in at least one save-selected-message log 123 is a subset of the message log 122 in the AOC/ATC computer 130 on the ground.

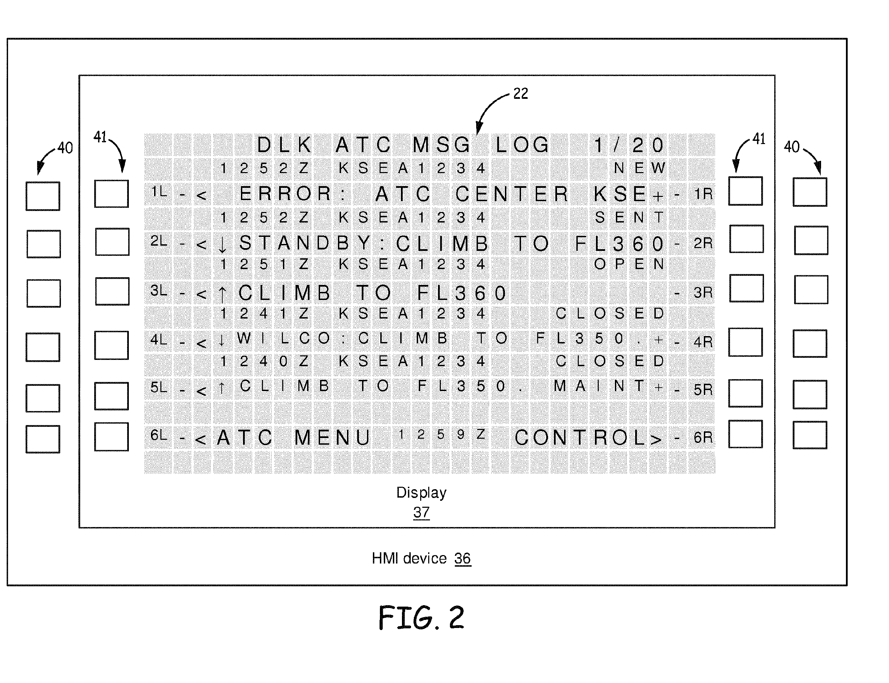

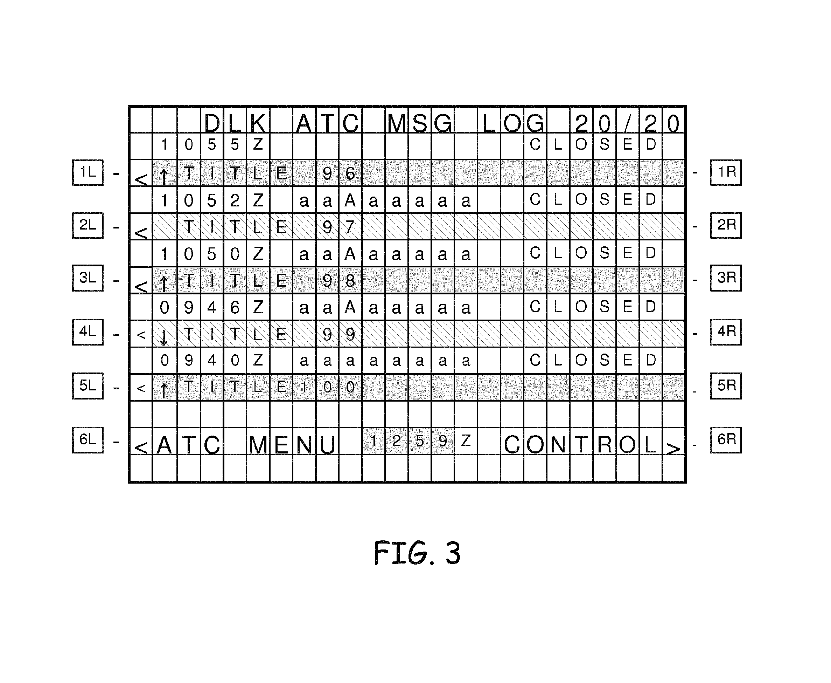

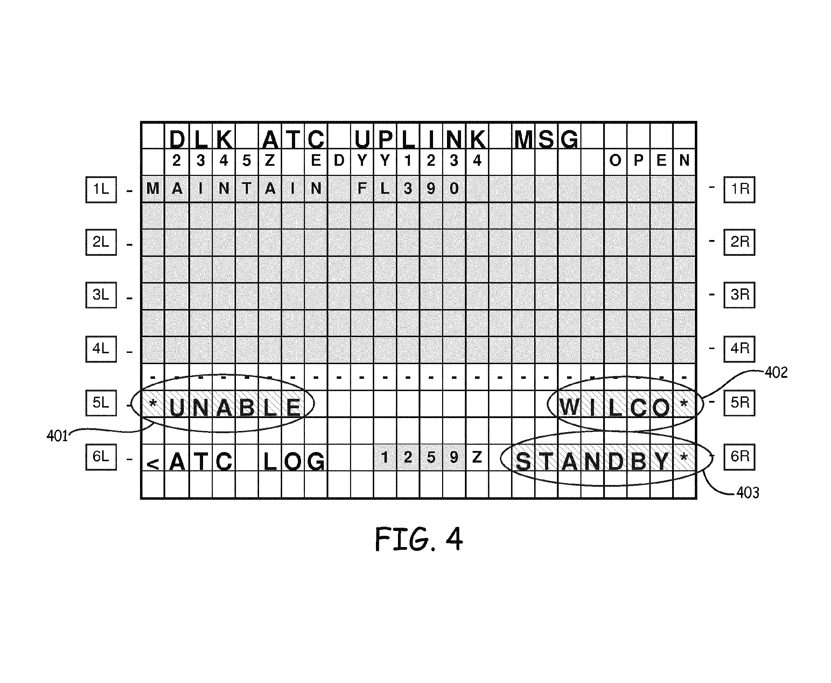

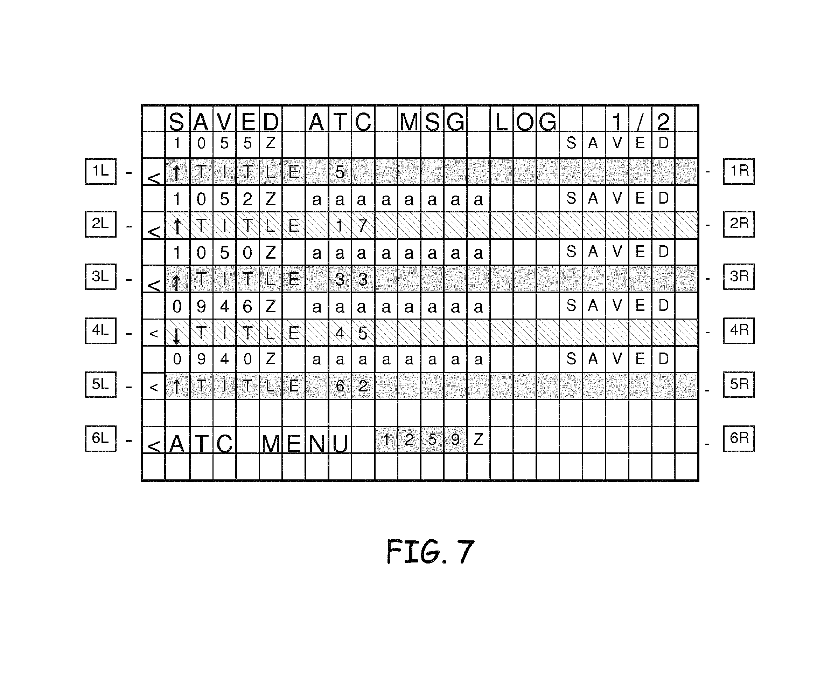

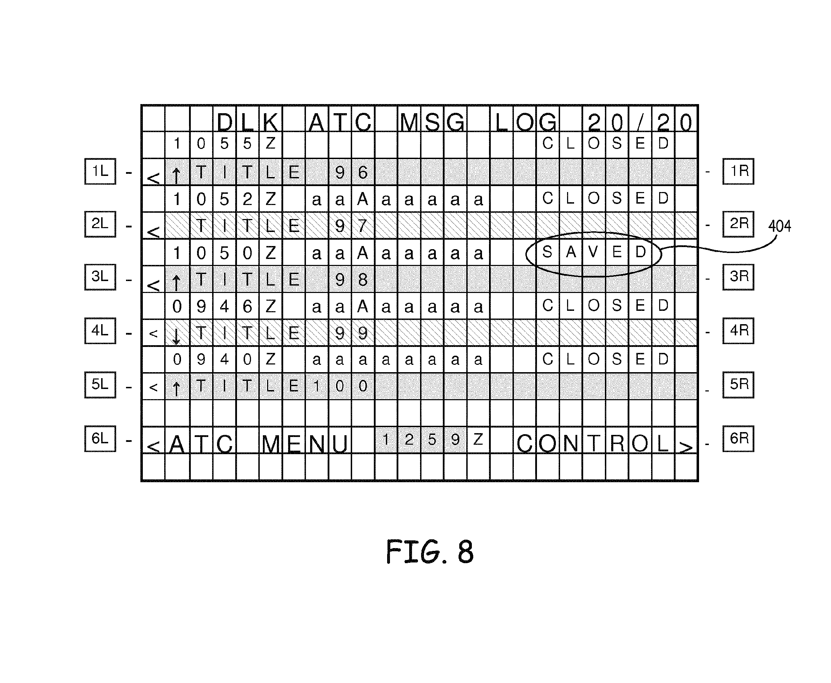

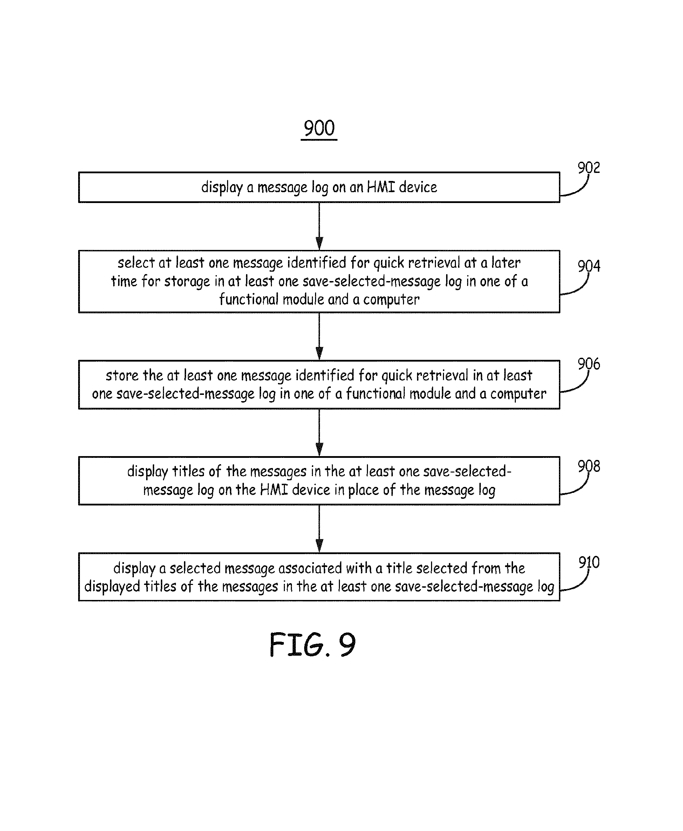

Figure 2 is an enlarged view of the human-machine-interface (HMI) device 36 of the data messaging system of Figures 1A and 1B displaying an exemplary page 1 of 20 in an air traffic controller (ATC) message log 22. Figure 3 is an exemplary page 20 of 20 in an ATC message log 22. Figures 4-6 are an exemplary sequence of three images of an ATC message log displayed on a display 37 when selecting a message for storage in accordance with the present invention. Figure 7 is an exemplary page 1 of 2 in a save-selected-message log 23 in accordance with the present invention. Figure 8 is an exemplary page 20 of 20 in an ATC message log 22 indicating the ninety-eighth message has been saved in a save-selected-message log 23 in accordance with the present invention. Figure 9 is a flow diagram of a method 900 of to save and retrieve selected messages in accordance with the present invention. The method 900 is described with reference to Figures 1-8.

At block 902, a message log 22 is displayed on a human-machine-interface (HMI) device 36 for a flight crew member in an aircraft 10 as shown in Figure 2. As shown in Figure 2, the message log 22 is an ATC message log 22. In one implementation of this embodiment, the message log 122 is displayed on a human-machine-interface (HMI) device 136 for a ground crew member. In this latter embodiment, the ground crew member is communicating with the flight crew on the aircraft 10 (Figures 1A and 1B) before and/or during a flight of the aircraft 10.

At block 904, at least one message identified for quick retrieval at a later time is selected for storage in at least one save-selected-message log in one of a functional module or a computer. In one implementation of this embodiment, the at least one message in the message log is identified for quick retrieval at a later time by a press of a button 40 or 44 (Figures 1A and 1B) or by a touch of the button/icon 41 on the display 37. In another implementation of this embodiment, there are two or more saved-selected-message logs 23 in the memory 20 for at least one of: one or more types of messages; one or more categories of messages; and one or more type of message and one or more category of message.

In yet another implementation of this embodiment, at least one message in the message log 22 is automatically identified for quick retrieval at a later time based on at least one of: one or more types of messages; one or more categories of messages; and one or more type of message and one or more category of message. In this embodiment, the processor 45 in the function module 26 executes software 29 to identify messages that are uplinked to the aircraft 10 via the wireless link 81 to determine if the uplinked message is within the category or type of message to be automatically saved. The processor 45 automatically identifies and categorizes the received messages based on at least one of the type of message and/or the category of message. When a message is a desired type of message and/or category of message, the processor 45 selects that message to send to the saved-selected-message log 23.

A type of message is related to the type of data messaging system sending the datalink message. The category of message is related to the content of the datalink message. An exemplary type of message is an ATC message or AOC message. An exemplary category of message is a weather-related message, a flight-plan message, or an altitude-related message. If weather-related messages are all to be saved for quick retrieval, when the uplinked message is related to weather conditions on the predetermined (or alternate) route of the aircraft 10 or at the destination of the aircraft 10, the processor 45 automatically identifies the uplinked message related to weather conditions as a message to be saved and selects that message. Likewise, the processor 145 in the computer 130 executes software 129 to identify messages that are downlinked from the aircraft 10 via the wireless link 81 to determine if the downlinked message is within the type of message and/or the category of message to be automatically saved.

In one implementation of this embodiment, the functional module 26 is an avionics functional module 26 (Figures 1A and 1B). In another implementation of this embodiment, the computer 130 is an AOC/ATC computer 130 (Figures 1A and 1C). In yet another implementation of this embodiment, the at least one air-traffic control (ATC) message identified for quick retrieval is selected from the message log 122 in an air traffic control computer 130 by an air traffic controller using the air traffic control computer 130. In this latter embodiment, the selected message is stored in the saved-selected-message log 123 on the air traffic control computer 130 for later quick retrieval by the air traffic controller. In yet another implementation of this embodiment, the at least one air-traffic control (ATC) message identified for quick retrieval is selected from the message log 22 in a functional module 26 by an a flight crew member in an aircraft 10 (Figures 1A and 1B). In this latter embodiment, the selected message is stored in the saved-selected-message log 23 on the functional module 26 for later quick retrieval by the flight crew member.

When the flight crew member receives and reviews a message on the display 37, as shown in Figure 4, that he wants to save in the saved-selected-message log 23 in order to be able to call up quickly, the flight crew member replies to the message and then tags the message (using one of the selection interfaces 40, 41, or 44) for later quick retrieval. If there is more than one saved-selected-message log 23, the flight crew member also selects (using one of the selection interfaces 40, 41, or 44) one of the at least two saved-selected-message logs 23 for storing the selected message identified for quick retrieval at the later time. Then the processor 45, based on the selection, causes a copy of the selected message to be sent from the message log 22 to the saved-selected-message log 23. Alternately, when the processor 45 has automatically categorized a received message based on at least one of a type of message and a category of message and the categorized received message is identified for quick retrieval at a later time, the processor 45, based on the automatic categorization, causes a copy of the selected message to be sent from the message log 22 to the saved-selected-message log 23. If there is more than one saved-selected-message log 23, the processor 45 also automatically selects one of the at least two saved-selected-message logs 23 for storing the selected message identified for quick retrieval at the later time.

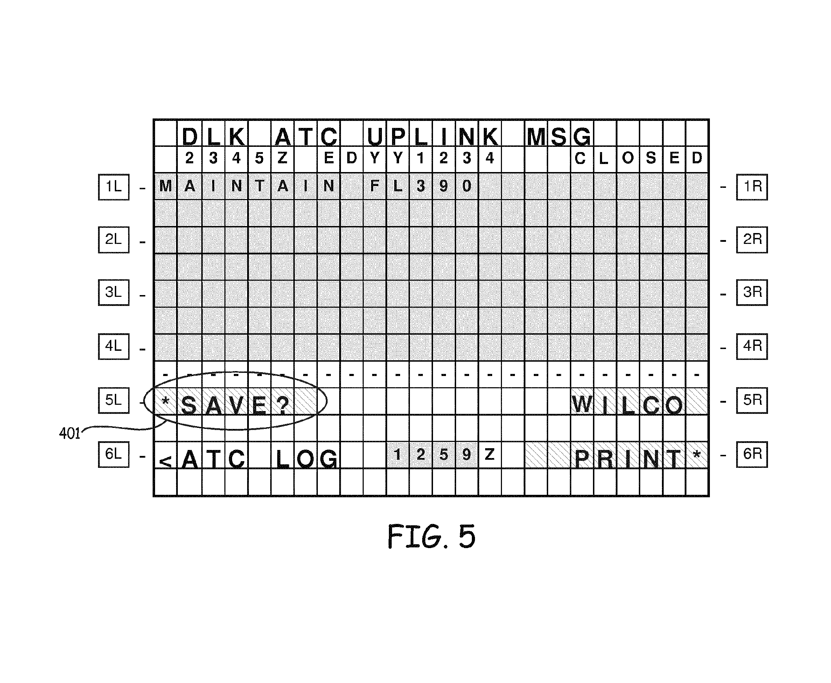

As shown in Figure 4, the pilot receives an ATC uplink message with directions to maintain flight 390. The pilot has various reply options including UNABLE, WILCO, or STANDBY shown in display-regions represented generally at 401, 402, and 403. To reply to the received message, the pilot presses one of the buttons (or icons) 5L, 5R, or 6R next to the respective UNABLE, WILCO, or STANDBY responses. A "SAVE?" prompt is displayed as shown in Figure 5 after the pilots elects a closure response such as WILCO shown in display region 402 shown in Figure 4. The "SAVE?" prompt is a text prompt for the pilot to consider if this message is one that he may later want to call up quickly for review. It is to be understood that all received messages are stored in the message log 22. The "SAVE?" prompt is not related to saving the message in the message log 22. If the pilot wants to save this message for quick retrieval, he presses (or touches) the "SAVE?" prompt on the message display screen 37 (Figures 1A and 1B). It is to be noted that the "SAVE?" prompt is an exemplary prompt. Other prompt texts may be used, such as, but not limited to, "QUICK", "QUICK?", "FAST", "FAST?", "SHORT?", "SHORT", "QRETV?", "QRETV", "RETRV?", and "RETRV".

Likewise, when a ground crew member receives an ATC downlink message, the ground crew member has various reply options. Once the ground crew member replies to the received message, a "SAVE?" prompt or an equivalent text prompt is displayed on the display of the HMI device 136 on the ground. This is a prompt for the ground crew member to consider if this message is one that he may later want to call up quickly for review. It is to be understood that all received messages are stored in the message log 122. The "SAVE?" prompt (as shown in Figure 5) is not related to saving the message in the message log 122. If the ground crew member wants to save a message for quick retrieval, he presses (or touches) the "SAVE?" prompt on the message display screen 137 (Figure 1C).

Likewise, when the ground crew member reviews a title of a message in the message log 122 on the display 137, as shown in Figure 3, that he wants to save in the saved-selected-message log 123 in order to be able to call up quickly, then the ground crew member tags (using one of the selection interfaces 140, 141, or 144) the message selected for later quick retrieval. If there is more than one saved-selected-message log 123, the ground crew member also selects (using one of the selection interfaces 140, 141, or 144) one of the at least two saved-selected-message logs 123 for storing the selected message identified for quick retrieval at the later time. The processor 145, based on the selection (or selections), causes a copy of the selected message to be sent from the message log 122 to the saved-selected-message log 123. Alternately, when the processor 145 has automatically categorized a received message based on at least one of a type of message and a category of message and the categorized received message is identified for quick retrieval at a later, the processor 145, based on the automatic categorization, causes a copy of the selected message to be sent from the message log 122 to the saved-selected-message log 123 in the air traffic control computer 130. If there is more than one saved-selected-message log 123, the processor 145 also automatically selects one of the at least two saved-selected-message logs 123 for storing the selected message identified for quick retrieval at the later time.

The sending is implemented via one of a bus, a trace line, or a circuit element that communicatively couples the processor 45 or 145 to the memory 20 or 120, respectively, and that communicatively couple the message log 22 or 122 to the saved-selected-message log 23 or 123, respectively.

At block 906, the at least one message identified for quick retrieval in at least one save-selected-message log 23 or 123 is stored in one of a functional module and a computer. The message that was selected and sent during block 904 is stored in the save-selected-message log 23 or 123. In an embodiment in which there is more than one saved-selected-message log 23, the message that was selected and sent during block 904 is stored in the save-selected-message log selected by the pilot or assigned by the processor 45. In another implementation of this embodiment, the selected message that is identified for quick retrieval is stored as a subset 223 of the message log 22. In this case, the at least one selected message identified for quick retrieval is flagged based on an attribute associated with the selected message. In this manner, the subset 223 of selected messages is the saved-selected-message log 23.

In one implementation of this embodiment, when the message log 22 is displayed on the display 37, the messages that have been stored in the saved-selected-message log 23 are indicated to be saved in the message status field of the message title. Figure 8 is an exemplary page 20 of 20 in an ATC message log 22, which indicates at display region 404, that the ninety-eighth message has been saved in the save-selected-message log 23.

At block 908, titles of the messages in the at least one save-selected-message log 23 or 123 are displayed on the HMI device 36 or 136, respectively, in place of the message log 22, or 122, respectively. The titles of the messages in the at least one save-selected-message log 23 or 123 are displayed responsive to an indication by the user that the user wants to retrieve a message from the saved-selected-message log 23 or 123. If there are two or more pages in the saved-selected-message logs, the user can quickly review the messages on the first page of the saved-selected-message log and then, if the desired message is not in the first page of the saved-selected-message log, the user can scroll to the second page of the saved-selected-message log. Alternately, if there are two or more types of saved-selected-message log, the user can identify which of the saved-selected-message logs to display based on a button press (or icon touch).

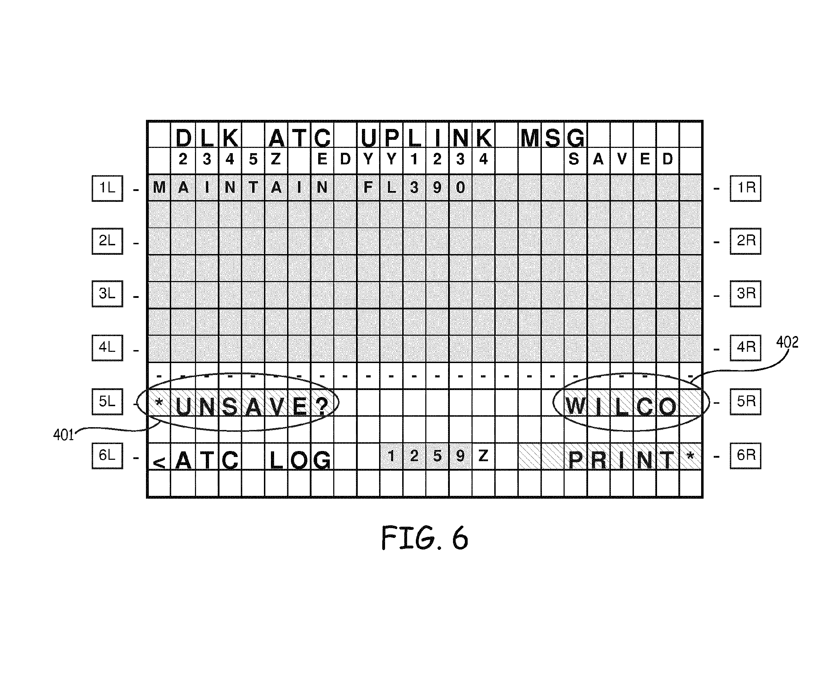

At block 910, the selected message associated with a title selected from the displayed titles of the messages in the at least one save-selected-message log is displayed responsive to the selection of the title made by a user during block 908. In one implementation of this embodiment, the selected message associated with a title selected from the displayed titles of the messages in the at least one save-selected-message log is displayed with the response to the selected message along with the selected message. For example, in Figure 6, the display-region 402 shows that a reply of WILCO was sent to the ground station 140 when the selected message associated with a title selected from the displayed titles of the messages in the at least one save-selected-message log was received.

In one implementation of this embodiment, at least one save-selected-message in the at least one saved-selected-message log is selected to be unsaved. As shown in Figure 6, when a message previously stored for quick retrieval is displayed for viewing by the user, the display region 401 shows an "UNSAFE?" prompt to the viewer of the display. In one implementation of this embodiment, the user elects to unsave a selected one of the stored at least one selected message identified for quick retrieval. In this case, the user touches the button or icon 5L adjacent to display-region 401 to indicate that the message can be unsaved. When a message that was previously stored in a saved-selected-message log is unsaved, the unsaved message is removed from the saved-selected-message log 23 and its status in the message log 22 changes from SAVED to CLOSED if it has not already been deleted from the message log 22.

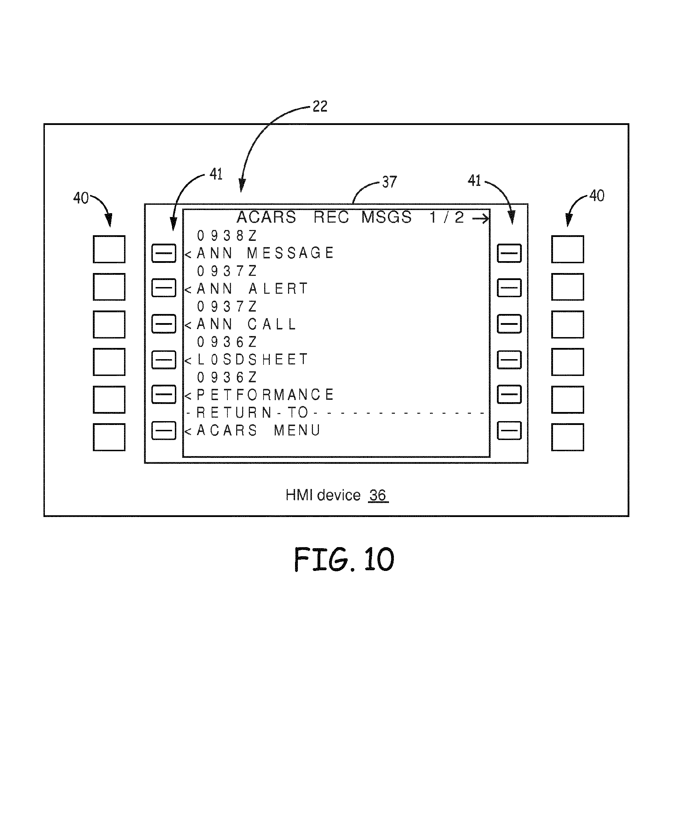

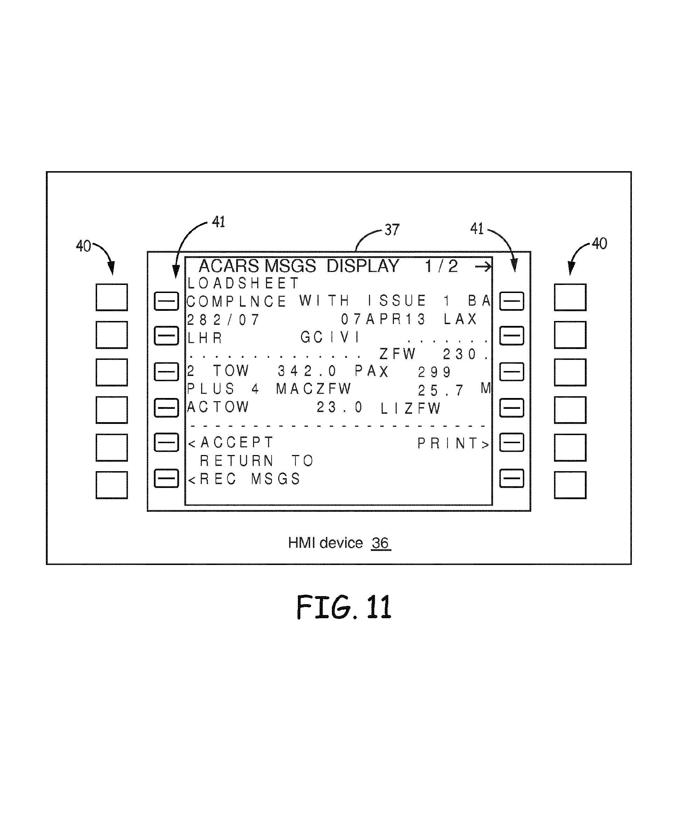

As described above, the message can be an AOC message. Figure 10 is an enlarged view of the human-machine-interface (HMI) device of the data messaging system 5 of Figure 1A displaying an exemplary page 1 of 2 in an airline operational communication (AOC) message log 22. Figure 11 is an enlarged view of the human-machine-interface (HMI) device of the data messaging system 5 of Figure 10 displaying an exemplary page 1 of 2 of an airline operational communication (AOC) message. In this embodiment, the message log 22 and 122 is an AOC message log 22 and 122, respectively (Figures 1A-1D). Although the vehicle 10 has been discussed herein as an aircraft 10, the vehicle 10 can also be any vehicle that uses a data messaging system that is configured to maintain a log of the messages and that includes a display for displaying and selecting messages from the log in accordance with the technology described herein.

In this manner, a message log is displayed on a human-machine-interface (HMI) device for a user to select at least one message identified for quick retrieval at a later time. The selected message is identified for quick retrieval at a later time in at least one save-selected-message log in a functional module or a computer. The number of messages in the at least one save-selected-message log is much less than a number of messages in the message log by an end of a flight. Titles of the messages can be displayed based on an indication by the user (e.g., touching or pressing a selection interface 40, 41, or 44) in the at least one save-selected-message log on the HMI device in place of the message log. Then, based on another indication by the user (e.g., touching or pressing a selection interface 40, 41, or 44), a selected message associated with a title selected from the displayed titles of the messages in the at least one save-selected-message log is displayed. The selection interface 40, 41, or 44 is used to select at least one message in the message log 22 that has been identified by a user (e.g., by a pilot or an air traffic controller). In one implementation of this embodiment, a user identifies which of the messages may be useful or desirable to have in a listing that is quickly accessible and that has a limited number of messages to scroll through. In another implementation of this embodiment, a processor 45 identifies which of the messages is useful or desirable to have in a listing that is quickly accessible. The limited listing of messages is useful since a pilot receives up to hundreds of messages during the course of a flight.

### Example Embodiments

Example 1 includes a data messaging system, comprising: means for displaying a message log on a human-machine-interface (HMI) device; means for selecting at least one message identified for quick retrieval at a later time; means for storing the at least one selected message identified for quick retrieval in at least one save-selected-message log in one of a functional module and a computer, wherein a number of messages in the at least one save-selected-message log is much less than a number of messages in the message log by an end of a trip; means for displaying titles of the messages in the at least one save-selected-message log on the HMI device in place of the message log; and means for displaying a selected message associated with a title selected from the displayed titles of the messages in the at least one save-selected-message log.

Example 2 includes the data messaging system of Example 1, wherein the one of the functional module and the computer includes at least one of a communication management unit, a communication management function, a flight management computer, a flight management function, an electronic flight bag, an avionics module, an airline operational communication computer, an avionics functional module, and an air traffic control computer.

Example 3 includes the data messaging system of any of Examples 1-2, wherein the HMI device is one of a Multi-function Control and Display Unit (MCDU), multi-function display, a touch screen with a key board, or a graphical display with a cursor control and a keyboard.

Example 4 includes the data messaging system of any of Examples 1-3, wherein the data messaging system is an avionics messaging system and the at least one selected message identified for quick retrieval is selected by a flight crew member in an aircraft.

Example 5 includes the data messaging system of any of Examples 1-4, wherein the data messaging system is an aeronautical ground messaging system and the at least one selected message identified for quick retrieval is selected by a ground crew member using an air traffic control computer.

Example 6 includes the data messaging system of any of Examples 1-5, wherein the means for storing the at least one selected message identified for quick retrieval in the at least one save-selected-message log comprises: means for automatically storing the at least one selected message identified for quick retrieval in the at least one save-selected-message log in the one of the functional module and the computer based on at least one of: one or more types of messages; one or more categories of messages; and one or more type of message and one or more category of message.

Example 7 includes the data messaging system of Example 6, wherein the means for automatically storing the at least one selected message identified for quick retrieval in the at least one save-selected-message log in the one of the functional module and the computer, further comprises: means for categorizing a received message based on at least one of a type of message and a category of message, wherein selecting by the means for selecting is based on the means for categorizing.

Example 8 includes the data messaging system of any of Examples 1-7, further comprising: means for sending the at least one selected message identified for quick retrieval to the at least one save-selected-message log.

Example 9 includes the data messaging system of any of Examples 1-8, further comprising: means for displaying a response to the selected message associated with the title selected from the displayed titles of the messages in the at least one saved-selected-message log.

Example 10 includes the data messaging system of any of Examples 1-9, further comprising: means for unsaving a selected one of the displayed selected messages associated with the title.

Example 11 includes the data messaging system of any of Examples 1-10, wherein the at least one save-selected-message log includes at least two saved-selected-message logs, the data messaging system further comprising: means for selecting one of the at least two saved-selected-message logs for storing the selected message identified for quick retrieval at the later time.

Example 12 includes the data messaging system of any of Examples 1-11, further comprising means for displaying a response to the selected message along with the selected message when the means for displaying the at least one save-selected-message log is implemented.

Example 13 includes a method to save and retrieve selected messages in a data messaging system, the method comprising: displaying a message log on a human-machine-interface (HMI) device; selecting at least one message identified for quick retrieval at a later time for storage in at least one save-selected-message log in one of a functional module and a computer; storing the at least one selected message identified for quick retrieval in at least one save-selected-message log in one of the functional module and the computer; displaying titles of the messages in the at least one save-selected-message log on the HMI device in place of the message log; and displaying a selected message associated with a title selected from the displayed titles of the messages in the at least one save-selected-message log.

Example 14 includes the method of Example 13, storing the at least one selected message identified for quick retrieval in at least one save-selected-message log comprises storing at least one of: at least one air-traffic control (ATC) message identified for quick retrieval selected by a member of an aircraft flight crew; at least one airline operational communication (AOC) message identified for quick retrieval selected by the member of the aircraft flight crew; at least one air-traffic control (ATC) message identified for quick retrieval selected by an ground crew operator; and at least one airline operational communication (AOC) message identified for quick retrieval selected by the ground crew operator.

Example 15 includes the method of any of Examples 13-14, wherein storing the at least one selected message identified for quick retrieval in the at least one save-selected-message log comprises: automatically storing the at least one selected message identified for quick retrieval in the at least one save-selected-message log based on at least one of: one or more types of messages; one or more categories of messages; and one or more type of message and one or more category of message.

Example 16 includes the method of any of Examples 13-15, wherein automatically storing the at least one selected message identified for quick retrieval in the at least one save-selected-message log in the one of the functional module and the computer, further comprises: categorizing a received message at a processor based on at least one of a type of message and a category of message.

Example 17 includes the method of any of Examples 13-16, further comprising: unsaving a selected one of the displayed selected messages associated with the title.

Example 18 includes the method of any of Examples 13-17, wherein the at least one save-selected-message log includes at least two saved-selected-message logs, the method further comprising: selecting one of the at least two saved-selected-message logs for the selected message identified for quick retrieval at the later time.

Example 19 includes the method of any of Examples 13-18, wherein storing the at least one selected message identified for quick retrieval in the at least one save-selected-message log comprises: flagging the at least one selected message identified for quick retrieval based on an attribute associated with the message, wherein the save-selected-message log is stored as a subset of the message log.

Example 20 includes an avionics data messaging system, comprising: means for displaying at least one of an air-traffic control (ATC) message log and an airline operational communication (AOC) message log on a Multi-function Control and Display Unit (MCDU): means for selecting at least one message identified for quick retrieval at a later time from the at least one of the ACT message log and the AOC message log; means for sending the at least one selected message to the at least one save-selected-message log in at least one of a communication management unit (CMU), a communication management function (CMF), a flight management computer (FMC), or an air traffic control computer; means for storing the at least one selected message identified for quick retrieval in at least one save-selected-message log, wherein a number of messages in the at least one save-selected-message log is much less than a number of messages in the message log by an end of a flight of an aircraft; means for displaying titles of the messages in the at least one save-selected-message log on the MCDU in place of the message log; and means for displaying a selected message associated with a title selected from the displayed titles of the messages in the at least one save-selected-message log.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A data messaging system (5, 6, 7), comprising:
means for displaying (37) a message log (22) on a human-machine-interface (HMI) device (36);
means for selecting (40, 41, 44) at least one message identified for quick retrieval at a later time;
means for storing (20, 25, 120, 125) the at least one selected message identified for quick retrieval in at least one save-selected-message log (23, 123) in one of a functional module (26) and a computer (130), wherein a number of messages in the at least one save-selected-message log is much less than a number of messages in the message log by an end of a trip;
means for displaying titles of the messages in the at least one save-selected-message log on the HMI device in place of the message log; and
means for displaying a selected message associated with a title selected from the displayed titles of the messages in the at least one save-selected-message log.

2. The data messaging system (5, 6, 7) of claim 1, wherein the one of the functional module (26) and the computer (130) includes at least one of a communication management unit, a communication management function, a flight management computer, a flight management function, an electronic flight bag, an avionics module, an avionics functional module, an airline operational communication computer, and an air traffic control computer.

3. The data messaging system (5, 6, 7) of claim 1, wherein the HMI device (36) is one of a Multi-function Control and Display Unit (MCDU), multi-function display, a touch screen with a key board, or a graphical display with a cursor control and a keyboard.

4. The data messaging system (5, 6, 7) of claim 1, wherein the data messaging system is an avionics messaging system and the at least one selected message identified for quick retrieval is selected by a flight crew member in an aircraft (10).

5. The data messaging system (5, 6, 7) of claim 1, wherein the data messaging system is an aeronautical ground messaging system and the at least one selected message identified for quick retrieval is selected by a ground crew member using an air traffic control computer (130).

6. The data messaging system (5, 6, 7) of claim 1, wherein the means for storing (20, 25, 120, 125) the at least one selected message identified for quick retrieval in the at least one save-selected-message log (23, 123) comprises:
means for automatically storing (20, 25, 120, 125) the at least one selected message identified for quick retrieval in the at least one save-selected-message log (23, 123) in the one of the functional module (26) and the computer (130) based on at least one of: one or more types of messages; one or more categories of messages; and one or more type of message and one or more category of message.

7. The data messaging system (5, 6, 7) of claim 6, wherein the means for automatically storing (20, 25, 120,125) the at least one selected message identified for quick retrieval in the at least one save-selected-message log (23, 123) in the one of the functional module and the computer, further comprises:
means for categorizing (45) a received message based on at least one of a type of message and a category of message, wherein selecting by the means for selecting is based on the means for categorizing.

8. The data messaging system of claim 1, further comprising:
means for sending the at least one selected message identified for quick retrieval to the at least one save-selected-message log (23, 123).

9. The data messaging system (5, 6, 7) of claim 1, further comprising:
means for unsaving (40, 41, 44) a selected one of the displayed selected messages associated with the title.

10. A method to save and retrieve selected messages in a data messaging system (5, 6, 7), the method comprising:
displaying a message log (22) on a human-machine-interface (HMI) device (36);
selecting at least one message identified for quick retrieval at a later time for storage in at least one save-selected-message log in one of a functional module (26) and a computer (130);
storing the at least one selected message identified for quick retrieval in at least one save-selected-message log in one of the functional module and the computer;
displaying titles of the messages in the at least one save-selected-message log (23) on the HMI device in place of the message log; and
displaying a selected message associated with a title selected from the displayed titles of the messages in the at least one save-selected-message log.
